# EUROPEAN PATENT SPECIFICATION

(11) **EP 2 979 547 B1**
(45) Date of publication and mention of the grant of the patent: **02.08.2017**
(21) Application number: 14773218.4
(22) Date of filing: 24.03.2014
(51) Int. Cl.: A01N 25/12, A01N 47/40, A01P 7/04, B01J 2/20

(54) **METHOD FOR MANUFACTURING AGRICULTURAL AND HORTICULTURAL GRANULE FORMULATION**
VERFAHREN ZUR HERSTELLUNG EINER LANDWIRTSCHAFTLICHEN UND GARTENBAULICHEN GRANULATFORMULIERUNG
PROCÉDÉ DE FABRICATION D'UNE FORMULATION DE GRANULÉS AGRICOLES ET HORTICOLES

(30) Priority: 26.03.2013 JP 2013065229
(43) Date of publication of application: 03.02.2016
(73) Proprietor: Nippon Soda Co., Ltd., Tokyo 100-8165 (JP)
(72) Inventor: SHIMANUKI, Kazuhiro, Takaoka-shi, Toyama 933-8507 (JP); TANAKA, Nobuyuki, Takaoka-shi, Toyama 933-8507 (JP); YAMAMURA, Satoru, Takaoka-shi, Toyama 933-8507 (JP); URA, Masahiro, Takaoka-shi, Toyama 933-8507 (JP)
(74) Representative: Wills, Andrew Jonathan
(86) International application number: PCT/JP2014/057970
(87) International publication number: WO 2014/157028

(56) References cited:
- WO-A1-2012/117862
- JP-A- H0 557 168
- JP-A- H10 245 303
- JP-A- S53 133 263
- JP-A- 2013 000 940
- DRY ET AL.: 'Funtai Kako Kikai Sogo Catalog' February 2014, pages 81 - 84 , 257 TO 258, XP008181242 Retrieved from the Internet: <URL:http://203.211.168.81/_book/powder/pow der.htm> [retrieved on 2014-06-05]

## Description

### TECHNICAL FIELD

The present invention relates to a method for producing an agricultural and horticultural granule. More specifically, the present invention relates to a method for stably producing an agricultural and horticultural granule for a prolonged period of time in a continuous manner.

### BACKGROUND ART

Agricultural and horticultural granules have been produced by molding a powder containing an agrochemical active ingredient into granules by using a lateral extrusion granulator or a frontal extrusion granulator (Non-Patent Document 1). Patent Document 1 describes a method for producing agrochemical granules.

The method comprises the step of obtaining a kneading material using a kneading device, then granulating the material by an extrusion method. In general, a lateral extrusion granulator is an apparatus having a hopper for feeding a powder, a screw casing, at least one screw that rotates inside the screw casing for kneading and extruding the fed powder, and a screen provided on a screw casing wall parallel to a screw shaft on the side away from the hopper for molding the kneaded powder into the form of strands, and is configured in such a manner that the temperature of the screw and the screw casing can be controlled by allowing a refrigerant to flow in the inner cavity of the screw shaft or in the inner cavity of the screw casing wall parallel to the screw shaft on the hopper side.

In those cases where continuous granulation is carried out, clogging of the screen of the granulator and local emissions of granulated products occur. These are caused by the frictional heat generated by the discharge characteristics and the continuous operation of the granulator, and the screen is dried and the clogging occurs by an increase in the temperature of the screen due to the frictional heat.

When the extrusion pressure at the time of granulation is high, even if the screen is clogged, a force generated by pressure from the inside acts so as to eliminate the clogging, thereby enabling a long term operation.

However, when the agrochemical active ingredient or the carrier is a water-soluble component, if the temperature of the kneaded product is high, the water-soluble component is dissolved in the added water, thereby increasing the ratio of water relative to solids and reducing the extrusion pressure at the time of granulation.

### CITATION LIST

Patent Document 1 WO2012/117862

Non-Patent Document 1 "MOSPILAN water-soluble granule" AGCHEM AGE, No. 193, 2012, 38-42 pages

### SUMMARY OF INVENTION

### Technical Problem

For this reason, in the conventional method for producing agricultural and horticultural granules, when attempts are made to mold an agrochemical composition containing a large amount of component with high water solubility into granules continuously for a long time using a lateral extrusion granulator, the screen is blocked at times. In addition, the strands extruded from the screen are fused with each other to form a lump like a yarn ball in some cases.

Accordingly, an object of the present invention is to provide a method for producing an agricultural and horticultural granule stably and also in a continuous manner for a long period of time by using an agrochemical composition containing a large amount of component with high water solubility.

### Solution to Problem

As a result of intensive studies in order to solve the above problems, the inventors of the present invention have completed the present invention which includes the following aspects.

[1] A method for producing an agricultural and horticultural granule which is a production method of an agricultural and horticultural granule by molding a powdered agrochemical composition into granules using a lateral extrusion granulator,
   the method characterized in that the aforementioned lateral extrusion granulator includes:
      a hopper for feeding a kneaded product of the aforementioned powdered agrochemical composition and water;
      a screw for kneading and extruding the aforementioned kneaded product;
      a screw casing for accommodating the aforementioned screw;
      a screen for molding the aforementioned kneaded product into strands which is provided on a screw casing wall parallel to a screw shaft on a side away from the aforementioned hopper; and
      a cooling unit for cooling a screw casing wall on a bearing side of a screw on a side away from the aforementioned hopper,
      wherein the aforementioned powdered agrochemical composition contains 20 to 80% by weight in total of a component having a water solubility of 4,000 to 500,000 ppm at a water temperature of 20°C and a pH of 3 to 9, wherein the cooling unit is a spot cooler, the temperature of an air blown by the spot cooler is from 0 to 25° C, the powdered agrochemical composition contains an agrochemical active ingredient having a water solubility of 4,000 to 500,000 ppm at a water temperature of 20°C and a pH of 3 to 9, the agrochemical active ingredient is a neonicotinoid-based insecticidal component, the powdered agrochemical composition contains a carrier having a water solubility of 4,000 to 500,000 ppm at a water temperature of 20°C and a pH of 3 to 9, and the carrier is a metal halide salt, a metal carbonate salt, a metal sulfate salt, an ammonium salt, urea, a monosaccharide, a disaccharide, or a polysaccharide.
The method for producing an agricultural and horticultural granule according to [1], characterized in that the aforementioned neonicotinoid-based insecticidal component is acetamiprid, dinotefuran or thiamethoxam.

### Advantageous Effects of Invention

According to the method of the present invention, in the production of an agricultural and horticultural granule, it is possible to produce an agricultural and horticultural granule continuously for a long time without causing the strands extruded from the screen to be fused with each other and without causing the screen blockage even when the agrochemical composition contains a large amount of component having a high water solubility.

### BRIEF DESCRIPTION OF DRAWINGS

FIG. 1 is a side perspective view of a lateral extrusion granulator to be used in a production method according to an embodiment of the present invention.
FIG. 2 is a top perspective view of a lateral extrusion granulator to be used in a production method according to an embodiment of the present invention.
FIG. 3 is a diagram showing an embodiment of a granule production facility.

### DESCRIPTION OF EMBODIMENTS

An embodiment of the present invention will be described with reference to the drawings.

A method for producing an agricultural and horticultural granule according to the present invention includes a step of molding a kneaded product 2 of a powdered agrochemical composition and water into granules by using a lateral extrusion granulator 1.

The aforementioned powdered agrochemical composition contains a total of 20 to 80% by weight, and more preferably 25 to 65% by weight, of a component having a water solubility of 4,000 to 500,000 ppm (at a water temperature of 20°C, and a pH of 3 to 9).

The aforementioned powdered agrochemical composition contains an agrochemical active ingredient having a water solubility of 4,000 to 500,000 ppm (at a water temperature of 20°C, and a pH of 3 to 9). Examples of such agrochemical active ingredients include acetamiprid, dinotefuran and thiamethoxam. These active ingredients may be used alone or may be used by mixing several kinds thereof.

The agrochemical active ingredient is a a neonicotinoid-based insecticidal component, and acetamiprid, dinotefuran, and thiamethoxam are more preferred.

The aforementioned powdered agrochemical composition contains, as the aforementioned component having a water solubility of 4,000 to 500,000 ppm (at a water temperature of 20°C, and a pH of 3 to 9), a carrier having a water solubility of 4,000 to 500,000 ppm (at a water temperature of 20°C, and a pH of 3 to 9). The carrier is a metal halide salt (example: potassium chloride, sodium chloride and calcium chloride), a metal carbonate salt (example: sodium carbonate and aluminium carbonate), a metal sulfate salt (example: sodium sulfate, magnesium sulfate and copper sulfate), an ammonium salt (example: ammonium chloride, ammonium sulfate and ammonium nitrate), urea, a monosaccharide (example: glucose and galactose), a disaccharide (example: sucrose, lactose and white sugar) or a polysaccharide (example:starch), although disaccharides are preferred, and lactose is particularly preferred.

These inorganic salts or saccharides may be used alone or several kinds thereof may be mixed.

The aforementioned powdered agrochemical composition may further contain other technical products. As such a technical product, for example, azimsulfuron, acequinocyl, azoxystrobin, abamectin, amisulbrom, alachlor, isotianil, isoprothiolane, ipfencarbazone, imicyafos, imidacloprid, imibenconazole, indaziflam, indanofan, indoxacarb, indoxacarb-MP, uniconazole-P, esprocarb, ethaboxam, ethychlozate, ethiprole, etoxazole, etofenprox, oxadiazon, oxadiargyl, oxaziclomefone, oxolinic acid, orysastrobin, cadusafos, cafenstrole, carpropamid, cumyluron, kresoxim-methyl, clothianidin, chromafenozide, clomeprop, chlorantraniliprole, chlorfenapyr, chlorphthalim, cyazofamid, cyenopyrafen, diclocymet, dithianon, dithiopyr, difenoconazole, cyflufenamid, cyflumetofen, simeconazole, dimethametryn, dimethenamid-P, dimethomorph, silafluofen, spinetoram, spinosad, spirodiclofen, spirotetramat, spiromesifen, daimuron, tiadinil, thifluzamide, tebuconazole, tebufenozide, tebufloquin, trinexapac-ethyl, trifloxystrobin, tolfenpyrad, trifluralin, novaluron, paclobutrazol, halosulfuron-methyl, bifenazate, bifenthrin, pymetrozine, pyraclostrobin, pyraclonil, pyraflufen-ethyl, pyriofenone, pyridaben, pyridalyl, pyriftalid, pyributicarb, pyrifluquinazon, pyriproxyfen, pyribencarb, pyrimisulfan, pyriminobac-methyl, fenoxanil, ferimzone, fenamidone, fentrazamide, fenpyrazamine, fenbuconazole, fenhexamid, butachlor, butamifos, buprofezin, furametpyr, fluacrypyrim, fluopicolide, fluopyram, fluxapyroxad, fludioxonil, flucetosulfuron, flutianil, flutolanil, flufenoxuron, flubendiamide, flupoxam, flurprimidol, pretilachlor, prosulfocarb, flonicamid, propamocarb hydrochloride, prohydrojasmon, propyrisulfuron, bromobutide, penoxsulam, pencycuron, bensulfuron-methyl, benzobicyclon, benthiavalicarb-isopropyl, benthiocarb, penthiopyrad, pendimethalin, pentoxazone, penflufen, benfuresate, boscalid, mandipropamid, myclobutanil, milbemectin, mecoprop-P isopropylamine salt, metaldehyde, methoxyfenozide, metconazole, metominostrobin, metolachlor, S-metolachlor, mefenacet, mepronil, lufenuron, lepimectin, EPN, IBP, MPP (fenthion), PAP (phenthoate), 1-methylcyclopropene, and the like may be mentioned. Of these, imidacloprid, ethaboxam, kresoxim-methyl, clothianidin, cyflufenamid, spinetoram, spinosad, tebufenozide, bifenthrin, pyribencarb, fluacrypyrim, flutianil, flubendiamide and flupoxam are preferred. In the aforementioned powdered agrochemical composition, a carrier which is insoluble in water such as clay may be used.

In the production method of the present invention, the amount of water to be added to the aforementioned powdered agrochemical composition can be adjusted appropriately by the component and the amount of the powdered agrochemical composition, although it is preferably from 5 to 25% by weight.

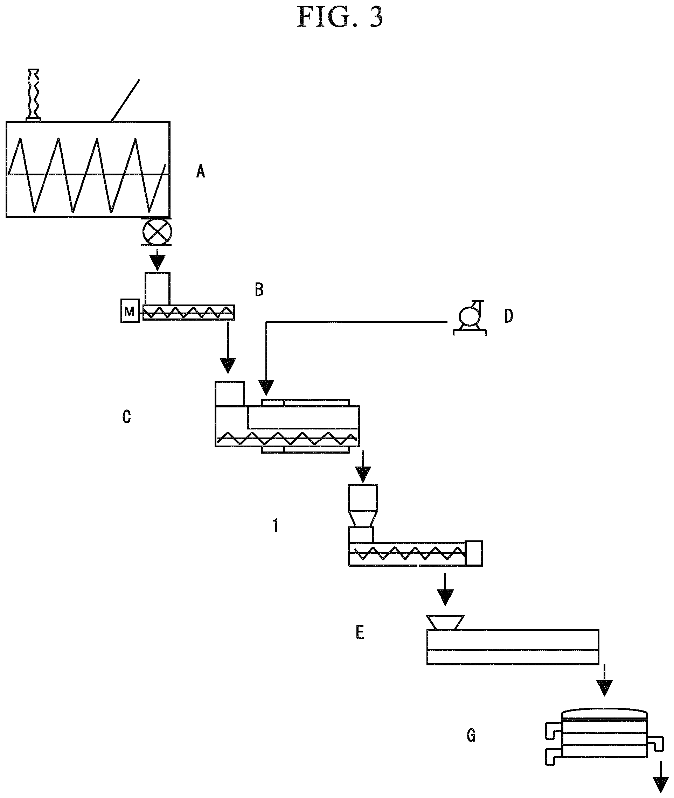

The aforementioned powdered agrochemical composition can be obtained by synthesizing the respective components, such as an agrochemical active ingredient, purifying and drying them by a known method, and then mixing and grinding the resultant, if necessary. For example, in the production facility shown in FIG. 3, an agrochemical active ingredient and an optional ingredient, such as a carrier, a surfactant, and a spreading agent are added to a mixing tank A, and are mixed in the mixing tank A. The resultant mixture is supplied to a continuous kneader C by adjusting the flow rate with a screw feeder B. In addition, water is supplied to the continuous kneader C at the same time by adjusting the flow rate with a metering pump D. The mixture and water are kneaded inside the continuous kneader C to yield a kneaded product 2 of the agrochemical composition and water.

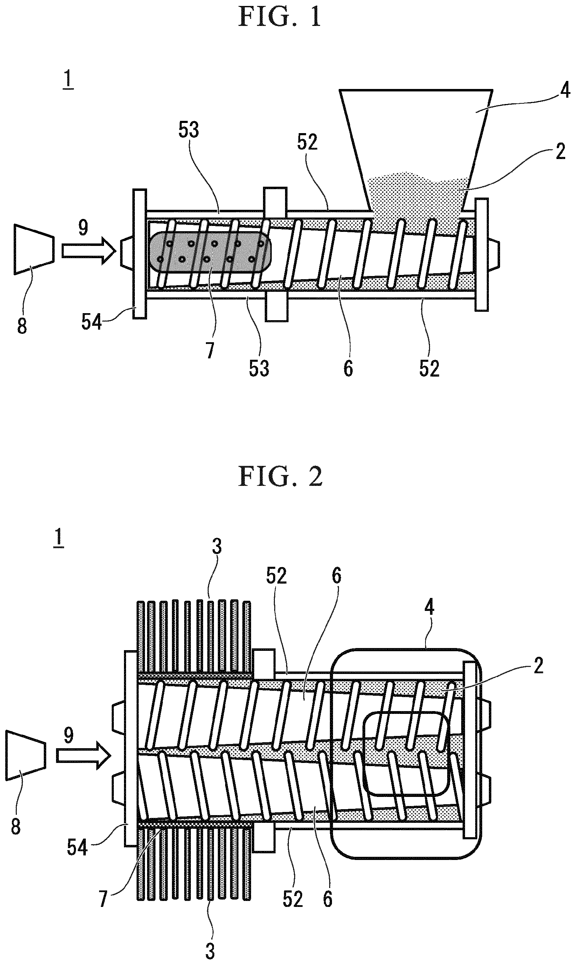

A lateral extrusion granulator 1 used in the present invention (FIGS. 1 and 2) includes: a hopper 4 for feeding the kneaded product 2 of the powdered agrochemical composition and water; a screw 6 for kneading and extruding the aforementioned kneaded product 2; a screw casing 5 for accommodating the aforementioned screw 6; a screen 7 for molding the kneaded product into strands which is provided on a screw casing wall 53 parallel to a screw shaft on a side away from the aforementioned hopper 4; and a cooling unit 8 for cooling a screw casing wall 54 on a bearing side of a screw on a side away from the hopper 4. The temperature of the screen 7 is preferably from 40 to 60°C.

In addition, the lateral extrusion granulator 1 used in the present invention may be configured in such a manner that the temperature of the screw 6 and the screw casing 5 can be controlled by allowing a refrigerant to flow into the inner cavity of the screw shaft or into the inner cavity of a screw casing wall 52 parallel to the screw shaft on the hopper side. Water is usually used as the refrigerant. The temperature of the cooling water to be flown into the screw shaft is preferably from 5 to 25°C. The temperature of the cooling water to be flown into the inner cavity of the screw casing wall 52 parallel to the screw shaft on the hopper side is preferably from 5 to 25°C. The measurement of the temperature can be conducted with an infrared sensor or the like.

In an embodiment of the present invention shown in FIG. 1 and FIG. 2, a cooling unit 8 is an air blower which blows a cooling air 9 to the screw casing wall 54 of the bearing side of the screw on the side away from the hopper 4. The temperature of the air to be blown is preferably from 0 to 25°C.

The temperature of the strand-like molded product immediately after being extruded from the screen 7 is preferably from 35 to 60°C. As shown in FIG. 3, the strand-like molded product is dried in a fluidized bed dryer E. The strand-like molded product is torn into short pieces during the fluidized drying to become granules. The resulting granules are classified with a circular vibration sieve G and adjusted into granules having a predetermined size.

### Examples

The present invention will be described below in more detail by showing an example and a comparative example.

### Comparative Example

A predetermined amount of water was added to a powdered agrochemical composition containing 20% by weight of acetamiprid serving as an agrochemical active ingredient and 45% by weight of lactose and the resultant was kneaded, and continuous production of a strand-like wet granulated product having a granule diameter of 0.7 mmϕ was started at a rate of about 155 kg-wet/hr with a lateral extrusion granulator.

The lateral extrusion granulator is configured so that two screws can carry out the kneading process by rotating inside the screw casing, and is equipped with a water-cooling function (water temperature: 20°C, pH: 3 to 9) for adjusting the temperature of the screw shaft and the screw casing parallel to the screw shaft on the hopper side and an air blower for cooling the wet granulated product extruded from the screen.

The obtained wet granulated product was dried continuously in an air dryer (not shown) in which the temperature was set to 65°C, thereby producing a granule having an apparent specific gravity of 0.544 to 0.593 and a granule diameter of 0.7 mmϕ. The temperature of the wet granulated product immediately after the start of the production was 40°C.

When 24 hours had passed from the start of the continuous production, the screen on the side close to the hopper was blocked, and the strands extruded from the screen on the side away from the hopper were hardened into the shape of a yarn ball. The temperature of the wet granulated product at this time was more than 64°C.

### Example

A predetermined amount of water was added to a powdered agrochemical composition containing 20% by weight of acetamiprid serving as an agrochemical active ingredient and 45% by weight of lactose and the resultant was kneaded, and continuous production of a strand-like wet granulated product 3 having a granule diameter of 0.7 mmϕ was started at a rate of about 155 kg-wet/hr with a lateral extrusion granulator 1.

The lateral extrusion granulator 1 (FIGS. 1 and 2) is configured so that two screws 6 can carry out the kneading process by rotating inside the screw casing, and is equipped with a water-cooling function (water temperature: 20°C, pH: 3 to 9) for adjusting the temperature of the shafts of the screws 6 and the screw casing 52 parallel to the screw shaft on the hopper 4 side and an air blower (not shown) for cooling the wet granulated product 3 extruded from the screen 7. Furthermore, the lateral extrusion granulator 1 used in the example includes a cooling unit 8 (spot cooler), and is configured so that the cooling unit 8 sends a cooling air 9 of about 15°C to a screw casing wall 54 of the screw shaft bearing side on the side away from the hopper 4.

The obtained wet granulated product 3 was dried continuously in an air dryer (not shown) in which the temperature was set to 65°C, thereby producing a granule having an apparent specific gravity of 0.544 to 0.593 and a granule diameter of 0.7 mmϕ. The temperature of the wet granulated product 3 immediately after the start of the production was 40°C.

Even after 48 hours had passed from the start of the continuous production, the screen was not blocked, and it was possible to stably produce the strand-like wet granulated product 3. The temperature of the wet granulated product 3 at this time was 45°C, and the temperature of the screen 7 was about 50°C.

### REFERENCE SIGNS LIST

1: Lateral extrusion granulator
2: Kneaded product
3: Wet granulated product
4: Hopper
5: Screw casing
52: Screw casing wall parallel to the screw shaft on the hopper side
53: Screw casing wall parallel to the screw shaft on the side away from the hopper
54: Screw casing wall on the bearing side of the screw on the side away from the hopper
6: Screw
7: Screen
8: Cooling unit (spot cooler)
9: Cooling air

## Claims

1. A method for producing an agricultural and horticultural granule, the method comprising molding a powdered agrochemical composition into granules using a lateral extrusion granulator,
wherein said lateral extrusion granulator comprises:
a hopper for feeding a kneaded product of said powdered agrochemical composition and water;
a screw for kneading and extruding said kneaded product;
a screw casing for accommodating said screw;
a screen for molding said kneaded product into strands which is provided on a screw casing wall parallel to a screw shaft on a side away from said hopper; and
a cooling unit for cooling a screw casing wall on a bearing side of a screw on a side away from said hopper, and
wherein said powdered agrochemical composition comprises 20 to 80% by weight in total of a component having a water solubility of 4,000 to 500,000 ppm at a water temperature of 20°C and a pH of 3 to 9,
wherein said cooling unit is a spot cooler,
wherein a temperature of an air blown by said spot cooler is from 0 to 25°C,
wherein said powdered agrochemical composition comprises an agrochemical active ingredient having a water solubility of 4,000 to 500,000 ppm at a water temperature of 20°C and a pH of 3 to 9,
wherein said agrochemical active ingredient is a neonicotinoid-based insecticidal component,
wherein said powdered agrochemical composition comprises a carrier having a water solubility of 4,000 to 500,000 ppm at a water temperature of 20°C and a pH of 3 to 9, and
wherein said carrier is a metal halide salt, a metal carbonate salt, a metal sulfate salt, an ammonium salt, urea, a monosaccharide, a disaccharide, or a polysaccharide.

2. The method for producing an agricultural and horticultural granule according to Claim 1, wherein said neonicotinoid-based insecticidal component is acetamiprid, dinotefuran, or thiamethoxam.

## Patentansprüche

1. Verfahren zur Herstellung eines landwirtschaftlichen und gartenbaulichen Granulats, wobei das Verfahren das Formen einer pulverisierten agrochemischen Zusammensetzung zu Granulat unter Verwendung eines Lateralfließpressgranulators umfasst,
wobei der Lateralfließpressgranulator Folgendes umfasst:
einen Trichter zum Einfüllen eines gekneteten Produkts der pulverisierten agrochemischen Zusammensetzung und Wasser;
eine Schnecke zum Kneten und Extrudieren des gekneteten Produkts;
ein Schneckengehäuse zum Einfassen der Schnecke;
ein Gittersieb zum Formen des gekneteten Produkts zu Strängen, das auf einer Schneckengehäusewand parallel zu einer Schneckenwelle auf einer Seite bereitgestellt ist, die dem Trichter abgewandt ist; und
eine Kühleinheit zum Kühlen einer Schneckengehäusewand auf einer tragenden Seite einer Schnecke an einer Seite, die dem Trichter abgewandt ist, und
wobei die pulverisierte agrochemische Zusammensetzung insgesamt 20 bis 80 Gew.-% einer Komponente umfasst, die bei einer Wassertemperatur von 20 °C und einem pH von 3 bis 9 eine Wasserlöslichkeit von 4.000 bis 500.000 ppm aufweist,
wobei die Kühleinheit ein Punktkühler ist,
wobei eine Temperatur einer Luft, die von dem Punktkühler ausgeblasen wird, von 0 bis 25 °C beträgt,
wobei die pulverisierte agrochemische Zusammensetzung einen agrochemisch aktiven Inhaltsstoff umfasst, der bei einer Wassertemperatur von 20 °C und einem pH von 3 bis 9 eine Wasserlöslichkeit von 4.000 bis 500.000 ppm aufweist,
wobei der agrochemisch aktive Inhaltsstoff eine auf einem Neonicotinoid basierende Insektizid-Komponente ist,
wobei die pulverisierte agrochemische Zusammensetzung einen Träger umfasst, der bei einer Wassertemperatur von 20 °C und einem pH von 3 bis 9 eine Wasserlöslichkeit von 4.000 bis 500.000 ppm aufweist, und
wobei der Träger ein Metallhalogenidsalz, ein Metallcarbonatsalz, ein Metallsulfatsalz, ein Ammoniumsalz, Harnstoff, ein Monosaccharid, ein Disaccharid oder ein Polysaccharid ist.

2. Verfahren zur Herstellung eines landwirtschaftlichen und gartenbaulichen Granulats nach Anspruch 1, wobei die auf einem Neonicotinoid basierende Insektizid-Komponente Acetamiprid, Dinotefuran oder Thiamethoxam ist.

## Revendications

1. Procédé de fabrication d'un granulé agricole et horticole, le procédé comprenant le moulage d'une composition agrochimique en poudre sous la forme de granulés à l'aide d'un granulateur à extrusion latérale,
dans lequel ledit granulateur à extrusion latérale comprend :
une trémie destinée à l'alimentation en un produit malaxé de ladite composition agrochimique en poudre et d'eau ;
une vis destinée au malaxage et à l'extrusion dudit produit malaxé ;
une enveloppe de vis accueillant ladite vis ;
une grille destinée au moulage dudit produit malaxé sous forme de brins qui est disposée sur une paroi de l'enveloppe de vis parallèle à une tige de vis du côté opposé à ladite trémie ; et
un dispositif de refroidissement destiné au refroidissement d'une paroi de l'enveloppe de vis du côté palier d'une vis du côté opposé à ladite trémie, et
dans lequel ladite composition agrochimique en poudre comprend de 20 à 80 % en poids au total d'un composant ayant une solubilité dans l'eau de 4 000 à 500 000 ppm à une température de l'eau de 20 °C et un pH de 3 à 9,
dans lequel ledit dispositif de refroidissement est un dispositif de refroidissement local,
dans lequel une température d'un air soufflé par ledit dispositif de refroidissement local est de 0 à 25 °C,
dans lequel ladite composition agrochimique en poudre comprend un principe actif agrochimique ayant une solubilité dans l'eau de 4 000 à 500 000 ppm à une température de l'eau de 20 °C et un pH de 3 à 9,
dans lequel ledit principe actif agrochimique est un composant insecticide à base de néonicotinoïde,
dans lequel ladite composition agrochimique en poudre comprend un entraîneur ayant une solubilité dans l'eau de 4 000 à 500 000 ppm à une température de l'eau de 20 °C et un pH de 3 à 9, et
dans lequel ledit entraîneur est un sel d'halogénure de métal, un sel de carbonate de métal, un sel de sulfate de métal, un sel d'ammonium, de l'urée, un monosaccharide, un disaccharide ou un polysaccharide.

2. Procédé de fabrication d'un granulé agricole et horticole selon la revendication 1, dans lequel ledit composant insecticide à base de néonicotinoïde est l'acétamipride, le dinotéfurane ou le thiaméthoxame.
